# EUROPEAN PATENT APPLICATION

(11) **EP 4 555 845 A1**
(43) Date of publication of application: **21.05.2025**
(21) Application number: 23209828.5
(22) Date of filing: 14.11.2023
(51) Int. Cl.: A01C 23/04, A01C 23/00

(54) **SYSTEM FOR PRODUCING A FERTILIZER SOLUTION FOR FERTIGATION**

(71) Applicant: Yara International ASA, 0277 Oslo (NO)
(72) Inventor: van Santen, Wouter, 4484 TD Kortgene (NL); Remfry Corben, Timothy, 2142 NK Vijfhuizen (NL)
(74) Representative: De Clercq & Partners

(57) **Abstract**

The present disclosure provides a system for preparing a fertilizer solution to an irrigation system, the system comprising a main water pipe (1), a fertilizer pressure tank (2), a first valve (5), and an electrical conductivity sensor (8). The present disclosure also provides a method for providing an aqueous fertilizer solution with a controlled nutrient content to an irrigation system.

## Description

### FIELD OF THE DISCLOSURE

The present disclosure is related to the field of agriculture, in particular the field of fertigation.

### BACKGROUND INFORMATION

Fertigation is the method of providing nutrients to a field via an irrigation system. The most common technique consists in preparing a stock aqueous solution with a high concentration in fertilizer products, mixing this stock solution with irrigation water, and distributing the diluted fertilizer solution to the field.

However, this method is highly limited by the water solubility of the fertilizer products and requires either a very large tank to prepare large amounts of stock solution or it requires the farmer to prepare the stock solution very often.

So, there is a need for a more practical and precise system for distributing fertilizer products to a field.

### SUMMARY OF THE DISCLOSURE

In a first aspect, the present disclosure provides a system for producing a fertilizer solution for fertigation. The system reduces the workload of the farmer and provides a fertilizer solution with a controlled composition.

The system comprises:
- a main water pipe comprising two ends, configured to be fluidically connected on the first end to a water source and on the second end to an irrigation system;
- a fertilizer pressure tank configured to hold a solid fertilizer composition, the fertilizer pressure tank being fluidically connected to the main water pipe by an inlet pipe and an outlet pipe, wherein:
   - the inlet pipe is fluidically connected to the main water pipe at a first connection and is configured to direct water from the main water pipe to the fertilizer pressure tank;
   - the outlet pipe is fluidically connected to the main water pipe at a second connection and is configured to direct an aqueous solution from the fertilizer pressure tank to the water pipe;
   - the first connection is located between the first end of the main water pipe and the second connection;
   - the second connection is located between the second end of the main water pipe and the first connection;
   - the main water pipe comprises a first valve located between the first connection and the second connection for controlling the water flow in the main water pipe between the first connection and the second connection; and
- the system further comprises an electrical conductivity sensor configured to measure the electrical conductivity of the aqueous solution in the main water pipe downstream of the second connection.

In another aspect, the present disclosure provides a method for providing an aqueous fertilizer solution with a controlled nutrient content to an irrigation system, the method comprising the steps of:
a. providing a system according to any one of claims 1 to 8, wherein the first valve of the system is open;
b. connecting the first end of the main water line to a water source;
c. connecting the second end of the main water line to an irrigation system;
d. adding a solid fertilizer to the fertilizer pressure tank;
e. closing the fertilizer pressure tank;
f. turning on the water source, thereby providing water to the first end of the main water line;
g. partially closing the first valve, thereby directing water to the inlet line, and receiving an aqueous solution comprising nutrients at the second connection;
h. controlling the opening of the first valve based on the EC value read on the EC-meter.

### BRIEF DESCRIPTION OF THE FIGURES

The following description of the figure of a specific embodiment of a system according to the present disclosure is only given by way of example and is not intended to limit the present explanation, its application or use. In the figure, identical reference numerals refer to the same or similar parts and features.
Figure 1 shows an embodiment of a system according to the present disclosure.
Figure 2 shows another embodiment of a system according to the present disclosure.

### DETAILED DESCRIPTION OF THE DISCLOSURE

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a device" refers to one or more than one device.
"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

In a first aspect, the present disclosure provides a system comprising:
- a main water pipe comprising two ends, configured to be fluidically connected on the first end to a water source and on the second end to an irrigation system;
- a fertilizer pressure tank configured to hold a solid fertilizer composition, the fertilizer pressure tank being fluidically connected to the main water pipe by an inlet pipe and an outlet pipe, wherein:
   - the inlet pipe is fluidically connected to the main water pipe at a first connection and is configured to direct water from the main water pipe to the fertilizer pressure tank;
   - the outlet pipe is fluidically connected to the main water pipe at a second connection and is configured to direct an aqueous solution from the fertilizer pressure tank to the water pipe;
   - the first connection is located between the first end of the main water pipe and the second connection;
   - the second connection is located between the second end of the main water pipe and the first connection;
   - the main water pipe comprises a first valve located between the first connection and the second connection for controlling the water flow in the main water pipe between the first connection and the second connection; and
- the system further comprises an electrical conductivity sensor configured to measure the electrical conductivity of the aqueous solution in the main water pipe downstream of the second connection.

The present system is designed to increase the precision of the irrigation operation and reduce the workload for the user.

The present system comprises a main water pipe comprising two ends, configured to be fluidically connected on the first end to a water source and on the second end to an irrigation system. Farmers that provide water to their fields comprise a main water line that is fluidically connected to a water source. The water source may be a natural water source, such as a river, a lake, a pond, a well, or an underground water reservoir. The water source may also be a container, for example a container configured to collect rain, or a source connected to tap water.

The present system also comprises a fertilizer pressure tank, which is a container that is configured to receive a large amount of solid fertilizer. A fertilizer pressure tank can contain solid fertilizers equivalent up to 70% of its empty volume. In operation, the amount of fertilizer contained in the fertilizer pressure tank slowly decreases until the user decides to refill it. In operation, the fertilizer pressure tank contains some water. In operation, the fertilizer pressure tank is hermetically sealed. A significant advantage of a fertilizer pressure tank is that it can contain a large amount of solid fertilizer, this means that the user does not have to reload it very often, and this reduces the workload of the user. This is opposed to an alternative system that uses a concentrated fertilizer solution tank, which contains an aqueous solution containing around 10 weight% of fertilizer. Preparing a stock solution also requires additional equipment, such as a mixing tank and mixing means, and transferring the stock solution from the mixing tank to the solution tank.

The fertilizer pressure tank is fluidically connected to the main water pipe by an inlet pipe and an outlet pipe:
- the inlet pipe is fluidically connected to the main water pipe at a first connection and is configured to direct water from the main water pipe to the fertilizer pressure tank;
- the outlet pipe is fluidically connected to the main water pipe at a second connection and is configured to direct an aqueous solution from the fertilizer pressure tank to the water pipe;
- the first connection is located between the first end of the main water pipe and the second connection;
- the second connection is located between the second end of the main water pipe and the first connection.

The fertilizer pressure tank is fluidically connected to the main water line via an inlet pipe such that water from the main water line can enter the tank, dissolve some of the solid fertilizer comprised in the tank, and rejoin the main water line via an outlet pipe.

The fertilizer pressure tank comprises at least three openings: one for adding a solid fertilizer in the tank, one for connecting to the inlet pipe, and one for connecting to the outlet pipe. In some embodiments, the fertilizer pressure tank comprises a fourth opening for draining the tank. A draining opening is usually found at the bottom of the container to facilitate its drainage.

The main water pipe comprises a first valve located between the first connection and the second connection for controlling the water flow in the main water pipe between the first connection and the second connection. When the valve is fully open, the water flow coming from the water source flows directly to the end of the main water line fluidically connected to the irrigation system. When the valve is partially closed, a portion of the water coming from the water source goes via the inlet pipe to the fertilizer pressure tank.

In some embodiments, the main water line has a diameter ranging from 30 to 120 mm.

In some embodiments, the inlet pipe and the outlet pipe have a diameter ranging from 5 to 30 mm. In some embodiments, the inlet pipe and the outlet pipe have the same diameter.

The system further comprises an electrical conductivity (EC) sensor configured to measure the electrical conductivity of the aqueous solution in the main water pipe downstream of the second connection. In conventional systems comprising a fertilizer pressure tank, the user has no means to control the fertilizer concentration of the aqueous solution being injected in the irrigation system. The first valve of the system is partially closed for a certain period of time until the user thinks that all the fertilizer has been dissolved. However, this is not desirable because the aqueous solution leaving the system has initially a high concentration in fertilizer, and this concentration decreases fast. A consequence of that is that the field segments which are located the furthest away from the fertilizer pressure tank do not receive the same amount of fertilizer compared to the field segments which are located close to the fertilizer pressure tank. By using an EC sensor, the user can obtain an estimate of the fertilizer concentration of the aqueous solution leaving the system and can regulate the opening of the first valve based on a target value.

An EC sensor is a device that measures the electrical conductivity of a solution. A lot of the fertilizer sources used in agriculture are salts containing ions, such as ammonium ions, nitrate ions, phosphate ions, potassium ions, that influence the electrical conductivity of the solution they are comprised in. So, the electrical conductivity of an aqueous fertilizer solution is a direct indicator of the nutrient concentration of said aqueous fertilizer solution. By using an EC sensor to measure the electrical conductivity of the aqueous solution in the main water line downstream of the second connection, the user ensures that the fertilizer concentration of the aqueous solution going in the field is within a suitable range, and that the fertilizer comprised in the fertilizer pressure tank is dissolved at a desired rate.

In some embodiments, the inlet pipe comprises a second valve for controlling the water flow flowing through the inlet pipe.

In some embodiments, the outlet pipe comprises a third valve for controlling the water flow flowing through the outlet pipe.

The flow of water from the main line to the fertilizer pressure tank via the inlet line is primarily regulated by the first valve of the main water line. However, it may be an advantage for the system to comprise a second and/or third valve located respectively on the inlet pipe and the outlet pipe. For example, if the user wants to open the fertilizer pressure tank, the inlet pipe, or the outlet pipe, for maintenance or to re-fill the fertilizer pressure tank, the user must ensure that no water from the main water line can reach the inlet line. By adding a second and/or third valve, the user can completely isolate the fertilizer pressure tank from the main water line.

In some embodiments, the volume of the fertilizer pressure tank ranges from 50 to 5 000 liters. The present system can be adapted to a wide range of farm sizes and field sizes. The bigger the fertilizer pressure tank is, the longer it can operate without requiring the farmer to add more fertilizer into the tank.

In some embodiments, the system comprises a controlling unit configured to control one or more valves selected from the group consisting of the first valve, the second valve, or the third valve. It is now possible to find valves that can be electronically controlled, i.e., the opening of a valve can be controlled by an electronic system, and not necessarily by a human operator. This facilitates the work of the user which does not have to be standing by the system in operation at all times. By adding a controlling unit that is configured to control the one or more valves comprised in the system, the workload for the user is further reduced.

In some embodiments, the system comprises a controlling unit configured to control the first valve. An advantage of having the controlling unit configured to control the first valve is that the system may not require the optional second and/or third valve.

In some embodiments, the system comprises a controlling unit configured to control the second valve or the third valve. An advantage of having the controlling unit configured to control the second or third valve is that the diameter of the inlet pipe and the outlet pipe is usually smaller than the diameter of the main water pipe, so the second valve and third valve may be smaller than the first valve, and therefore less expensive.

In some embodiments, the controlling unit is configured to control the one or more valves depending on the value of electrical conductivity measured by the EC sensor. The controlling unit can be connected to the EC sensor via physical or wireless means, such that the controlling unit can obtain the EC value measured by the EC sensor. The controlling unit can be configured to control the one or more valves depending on the value of electrical conductivity measured by the EC sensor, which is representative of the fertilizer concentration of the aqueous solution downstream of the second connection. If the EC value read by the EC sensor is too low, the controlling unit can be configured to further close the first valve and/or further open the second and/or third valve, thereby sending more water to the fertilizer pressure tank, thereby increasing the fertilizer concentration of the aqueous solution downstream of the second connection. If the EC value read by the EC sensor is too high, the controlling unit can also be configured to open the first valve and/or close the second and/or third valve, thereby lowering the amount of water sent to the fertilizer pressure tank and reducing the fertilizer concentration of the aqueous solution downstream of the second connection.

In some embodiments, the controlling unit is configured to maintain the electrical conductivity measured by the EC sensor within a set range. When using a fertilizer, it is possible to calculate a desired EC value of the aqueous solution downstream of the second connection that corresponds to a desired concentration of the dissolved fertilizer. So, it is possible to configure the controlling unit such that the controlling unit maintains the EC value read by the EC sensor around a desired value.

In some embodiments, the system comprises a filter for removing water-insoluble particles from an aqueous solution. When using fertigation to provide fertilizer sources to a field, it is highly desirable to use a fertilizer with a very low amount of water-insoluble particles. However, these fertilizers can be very expensive and/or their producer might not be able to guarantee a 100% watersoluble content. Therefore, it may be an advantage for the present system to comprise a filter for removing water-insoluble particles from an aqueous solution. Water-insoluble particles may damage an irrigation system, for example, pumps or sprayers, and the particles may also clog the irrigation lines.

In some embodiments, the filter is positioned on the outlet pipe or on the main water pipe downstream of the second connection. The filter should be positioned downstream of the fertilizer pressure tank to remove water-insoluble particles that may be comprised in the solid fertilizer. The filter may be positioned on the outlet pipe or on the main water pipe downstream of the second connection. Another advantage of having a filter on the main water line downstream of the second connection is that the water from the water source is also continuously filtered before it reaches the irrigation system.

In another aspect, the present disclosure provides a method for providing an aqueous fertilizer solution with a controlled nutrient content to an irrigation system, the method comprising the steps of:
a. providing a system according to any one of claims 1 to 8, wherein the first valve of the system is open;
b. connecting the first end of the main water line to a water source;
c. connecting the second end of the main water line to an irrigation system;
d. adding a solid fertilizer to the fertilizer pressure tank;
e. closing the fertilizer pressure tank;
f. turning on the water source, thereby providing water to the first end of the main water line;
g. partially closing the first valve, thereby directing water to the inlet line, and receiving an aqueous solution comprising nutrients at the second connection;
h. controlling the opening of the first valve based on the EC value read on the EC-meter.

The present method is for providing an aqueous fertilizer solution with a controlled nutrient content to an irrigation system. A system as described above is provided and fluidically connected to a water source and an irrigation system. A solid fertilizer is added to the fertilizer pressure tank. The fertilizer pressure tank can be filled up to the recommendation of the manufacturer. Ine some embodiments, the fertilizer pressure tank is filled up to at most 70%, at most 60%, or at most 50% of its volume.

Once the solid fertilizer has been added, the opening of the fertilizer pressure tank used for adding a solid fertilizer is closed.

Optionally, the first valve on the main water line is fully opened to establish a flow of water before the water source is turned on, thereby providing water to the first end of the main water line. The water flows from the first end of the main water line to the second end of the main water line.

When the user is ready to fertigate their field, the first valve is partially closed, thereby directing water to the inlet line.

The water enters the fertilizer pressure tank, dissolves some of the solid fertilizer present in the tank, and exits the tank via the outlet line.

The EC sensor then measures the EC value of the water in the main water line or in the outlet line, and based on the value indicated by the sensor, the user can control the first valve, i.e., further close it, leave at the same opening, or re-open it partially, until the EC value indicated by the EC sensor reaches an acceptable value.

In some embodiments, the controlling step h. comprises the steps of further closing, i.e., reducing the opening of, the first valve if the EC value given by the EC meter is below a target value.

In some embodiments, the controlling step h. comprises the steps of opening or increasing the opening of, the first valve if the EC value given by the EC meter is above a target value.

In some embodiments, the controlling step h. comprises the step of further opening the second and/or third valve if the EC value given by the EC meter is below a target value,

In some embodiments, the controlling step h. comprises the step of closing or reducing the opening of, the second and/or third valve if the EC value given by the EC meter is above a target value.

The EC target value may depend on a number of factors specific to each fertigation operation, such as the size of the field to be fertigated, the chemical composition of the solid fertilizer, the EC value of the water coming from the water source.

In some embodiments, the steps h) and i) are performed by a controlling unit. The controlling unit can be connected, via physical or wireless means, to the EC sensor and the first valve, and optionally, the second and/or third valve, and be configured to control the opening of the valves depending on the EC value provided by the EC sensor.

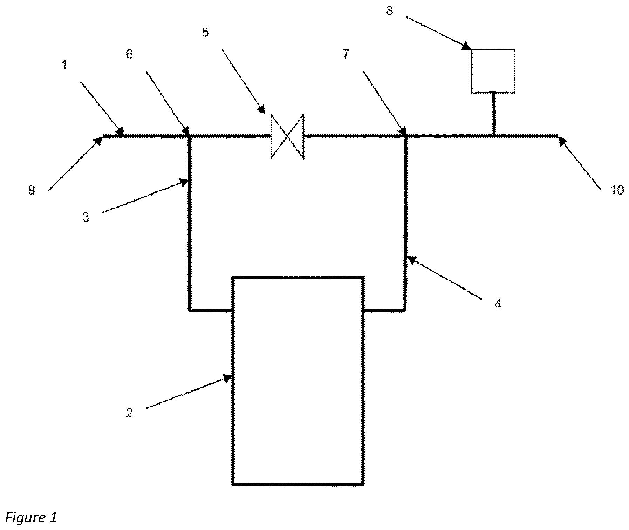

Figure 1 shows an embodiment of a system according to the present disclosure. The system comprises a main water pipe **1** comprising two ends (**9, 10**), configured to be fluidically connected on the first end **9** to a water source and on the second end **10** to an irrigation system. The system also comprises a fertilizer pressure tank **2** configured to hold a solid fertilizer composition, the fertilizer pressure tank **2** being fluidically connected to the main water pipe **1** by an inlet pipe **3** and an outlet pipe **4.** The inlet pipe **3** is fluidically connected to the main water pipe **1** at a first connection **6** and is configured to direct water from the main water pipe **1** to the fertilizer pressure tank **2.** The outlet pipe **4** is fluidically connected to the main water pipe **1** at a second connection **7** and is configured to direct an aqueous solution comprising fertilizer from the fertilizer pressure tank **2** to the water pipe **1.** The first connection **6** is located between the first end **9** of the main water pipe **1** and the second connection **7.** The second connection **7** is located between the second end **10** of the main water pipe **1** and the first connection **6.** The main water pipe **1** comprises a first valve **5** located between the first connection **6** and the second connection **7** for controlling the water flow in the main water pipe **1** between the first connection **6** and the second connection **7.** The system further comprises an electrical conductivity sensor **8** configured to measure the electrical conductivity of the aqueous solution in the main water pipe **1** downstream of the second connection **7.**

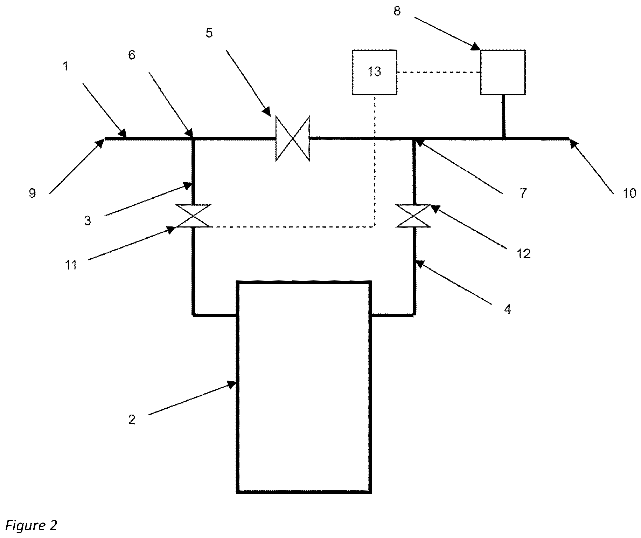

Figure 2 shows another embodiment of a system according to the present disclosure. The system comprises the same features as the embodiment shown in figure 1. In addition, the system comprises a second valve **11** located on the inlet pipe **3** and a third valve **12** located on the outlet pipe **4.** The system also comprises a controlling unit **13** that is wirelessly connected to the EC-meter **8** and the second valve **11.** The controlling unit **13** is configured to receive the EC value of the solution downstream od the second connection **7** read by the EC-meter **8,** and control the opening of the second valve **11** based on the EC-value received: if the EC value is too high, the opening of the second valve **11** is reduced; if the EC value is too low, the opening of the second valve **11** is increased.

## Claims

1. A system comprising:
- a main water pipe (1) comprising two ends (9, 10), configured to be fluidically connected on the first end (9) to a water source and on the second end (10) to an irrigation system;
- a fertilizer pressure tank (2) configured to hold a solid fertilizer composition, the fertilizer pressure tank (2) being fluidically connected to the main water pipe (1) by an inlet pipe (3) and an outlet pipe (4), wherein:
- the inlet pipe (3) is fluidically connected to the main water pipe (1) at a first connection (6) and is configured to direct water from the main water pipe (1) to the fertilizer pressure tank (2);
- the outlet pipe (4) is fluidically connected to the main water pipe (1) at a second connection (7) and is configured to direct an aqueous solution from the fertilizer pressure tank (2) to the water pipe (1);
- the first connection (6) is located between the first end (9) of the main water pipe (1) and the second connection (7);
- the second connection (7) is located between the second end (10) of the main water pipe (1) and the first connection (6);
- the main water pipe (1) comprises a first valve (5) located between the first connection (6) and the second connection (7) for controlling the water flow in the main water pipe (1) between the first connection (6) and the second connection (7);
**characterized in that** the system further comprises an electrical conductivity sensor (8) configured to measure the electrical conductivity of the aqueous solution in the main water pipe (1) downstream of the second connection (7).

2. The system according to claim 1, wherein the inlet pipe (3) comprises a second valve for controlling the water flow flowing through the inlet pipe (3).

3. The system according to claim 1 or 2, wherein the outlet pipe (4) comprises a third valve for controlling the water flow flowing through the outlet pipe (4).

4. The system according to any one of claims 1 to 3, wherein the system comprises a controlling unit configured to control one or more valves selected from the group consisting of the first valve (5), the second valve, or the third valve.

5. The system according to any one of claims 1 to 4, wherein the controlling unit is configured to control the one or more valves depending on the value of electrical conductivity measured by the EC sensor (8).

6. The system according to any one of claims 1 to 5, wherein the controlling unit is configured to maintain the electrical conductivity measured by the EC sensor (8) within a set range.

7. The system according to any one of claims 1 to 6, wherein the system comprises a filter for removing water-insoluble particles from an aqueous solution.

8. The system according to claim 7, wherein the filter is positioned on the outlet pipe (4) or on the main water pipe (1) downstream of the second connection (7).

9. A method for providing an aqueous fertilizer solution with a controlled nutrient content to an irrigation system, the method comprising the steps of:
a. providing a system according to any one of claims 1 to 8, wherein the first valve of the system is open;
b. connecting the first end (9) of the main water line (1) to a water source;
c. connecting the second end (10) of the main water line (1) to an irrigation system;
d. adding a solid fertilizer to the fertilizer pressure tank (2);
e. sealing the fertilizer pressure tank (2);
f. turning on the water source, thereby providing water to the first end (9) of the main water line (1);
g. partially closing the first valve (5), thereby directing water to the inlet line (3), and receiving an aqueous solution comprising nutrients at the second connection (7); and
h. controlling the opening of the first valve based on the EC value read on the EC-meter (8).
